# DEMANDE DE BREVET EUROPEEN

(11) **EP 4 169 681 A1**
(43) Date de publication de la demande: **26.04.2023**
(21) Numéro de dépôt: 22202161.0
(22) Date de dépôt: 18.10.2022
(51) Int. Cl.: B25J 21/02, B01L 1/02, B08B 15/02, E04H 15/20, G21F 7/047

(54) **BOÎTE À GANTS SOUPLE ET PORTATIVE POUR INTERVENTION HORS LABORATOIRE**

(30) Priorité: 19.10.2021 FR 2111090
(71) Demandeur: CARMA MC, 38080 Saint Alban de Roche (FR)
(72) Inventeur: Carron, Gérard, 38080 Saint Alban de Roche (FR)
(74) Mandataire: Lavoix

(57) **Abrégé**

La boîte à gants (1), qui est particulièrement adaptée à aux opérations des forces de l'ordre ou de sécurité, comporte un socle (10) souple, qui est gonflable et qui, à l'état gonflé, forme un support de travail plan, adapté pour être positionné à l'horizontale. La boîte à gants comporte également une enveloppe (20) souple, qui s'étend depuis le socle de manière que le socle et l'enveloppe délimitent conjointement un volume fermé, cette enveloppe comprenant des parois (21), qui sont transparentes et séparent chacune l'intérieur et l'extérieur du volume fermé, une armature (22), qui est gonflable et supporte les parois de sorte que, à l'état gonflé du socle et de l'armature, les parois sont tendues en donnant au volume fermé une forme opérationnelle, et au moins une paire de gants de manipulation portés de manière étanche par l'une des parois. Le socle comprend un corps principal, qui est creux, en délimitant ainsi une chambre de gonflage qui, lorsqu'elle est remplie d'un fluide sous pression, met le socle à l'état gonflé. A l'état gonflé du socle, son corps principal forme un plateau de travail qui est stable en forme de sorte que les objets situés à l'intérieur du volume fermé peuvent reposer sur une face supérieure du corps principal de manière stable. A l'état gonflé du socle et de l'armature, le socle est plus résistant à la déformation que les parois.

## Description

La présente invention concerne une boîte à gants souple et portative pour intervention hors laboratoire.

Lors d'intervention policière ou militaire, les forces de l'ordre ou de sécurité peuvent être amenées à devoir manipuler des objets dangereux car susceptibles d'être contaminants. Les contaminations en question sont par exemple de nature nucléaire, radiologique, biologique et/ou chimique. Les objets concernés sont, par exemple, des objets suspects, tels que des colis, enveloppes ou sacs, ou des produits chimiques, tels que des révélateurs ou des réactifs, utilisés par les forces de l'ordre ou de sécurité dans le cadre d'opérations techniques pour des besoins d'investigation. Egalement lors d'interventions policières ou militaires, les forces de l'ordre ou de sécurité peuvent avoir à manipuler des objets, qui ont été préalablement mis sous scellés et qui ne doivent pas, lors de leur manipulation ultérieure, être « pollués » par les forces de l'ordre ou de sécurité elles-mêmes.

Dans ces diverses circonstances, il est nécessaire, pour la sécurité des opérateurs et/ou l'intégrité du contenu de scellés, que les objets concernés soient manipulés en laboratoire, dans une boîte à gants. Une telle boîte à gants, autrement appelée isolateur, est une enceinte rigide qui délimite de manière étanche un volume fermé et qui intègre des gants permettant de manipuler les objets placés à l'intérieur du volume fermé, le cas échéant sous atmosphère contrôlée. Le recours à de telles boîtes à gants est contraignant dans le sens où les forces de l'ordre ou de sécurité ne peuvent pas manipuler les objets « sur le terrain », mais doivent transporter les objets jusqu'en laboratoire.

US 2004/158121 divulgue une boîte à gants souple et portative. Cette boîte à gants comporte une armature, constituée de tubes gonflables, et des parois transparentes qui, à l'état gonflé de l'armature, donnent à la boîte à gants une forme opérationnelle parallélépipédique, en délimitant entre les parois une chambre. Les parois incluent une paroi de fond qui est identique aux cinq autres parois, en étant notamment tout aussi molle que ces cinq autres parois.

Dans un domaine distinct, CN 111329700 divulgue une cabine de transport d'un patient infectieux. Cette cabine se présente sous la forme d'un conduit en U tourné vers le bas, ce conduit ayant une longueur de 200 cm, une largeur de 80 cm et une hauteur de 80 cm afin qu'un patient puisse y être placé en position allongée. A une de ses deux extrémités longitudinales, la cabine comporte une paroi rigide qui supporte un module permettant de commander/gérer en temps réel la mise en dépression contrôlée de l'intérieur de la cabine. La cabine comporte également une enveloppe souple, qui est transparente et qui s'étend depuis la paroi rigide sur toute la longueur de la cabine. Cette enveloppe souple intègre des nervures gonflables qui, à l'état gonflé, tendent l'enveloppe souple pour donner à la cabine sa forme de conduit en U tourné vers le bas. La cabine est équipée intérieurement d'un matelas gonflable qui, à l'état gonflé, occupe le fond de l'enveloppe souple sur toute la longueur de la cabine, afin que le patient s'y allonge.

Le but de la présente invention est de proposer une nouvelle boîte à gants qui soit plus adaptée à des opérations telles que celles des forces de l'ordre ou de sécurité.

A cet effet, l'invention a pour objet une boîte à gants souple et portative pour intervention hors laboratoire, telle que définie à la revendication 1.

Une des idées à la base de l'invention est de conserver le principe général d'une boîte à gants rigide, mais de rendre cette boîte à gants souple et portative, afin de pouvoir l'utiliser hors laboratoire. A cet effet, la boîte à gants conforme à l'invention associe un socle souple et une enveloppe souple, qui conjointement ferment de manière étanche un volume intérieur dans lequel, en service, des objets à manipuler peuvent être placés. Le socle et une armature de l'enveloppe sont prévus gonflables : à l'état gonflé, le socle forme un plateau à utiliser à l'horizontale, sur lequel les objets situés à l'intérieur du volume intérieur reposent de manière stable, et l'armature tend des parois transparentes de l'enveloppe, en donnant au volume intérieur de la boîte à gants une forme opérationnelle, en particulier une forme de pavé, par exemple cubique. Une ou plusieurs paires de gants de manipulation sont portées de manière étanche par les parois transparentes. La boîte à gants conforme à l'invention est particulièrement pratique puisqu'elle peut être facilement transportée à l'état dégonflé, puis être gonflée sur site, à proximité immédiate des objets à manipuler, notamment par des forces de l'ordre ou de sécurité. La structure souple de la boîte à gants conforme à l'invention est mise à profit à l'état dégonflé du socle et de l'armature pour en faciliter le stockage et le transport, tandis que la capacité de gonflage du socle et de l'armature est mise à profit pour stabiliser et maintenir en forme la boîte à gants, notamment en figeant la forme opérationnelle du volume intérieur de cette dernière. En pratique, la boîte à gants conforme à l'invention peut avantageusement présenter des aménagements renforçant encore sa praticité. Ainsi, comme détaillé par la suite, la boîte à gants peut être à usage unique et/ou avoir son socle et son armature qui sont gonflables conjointement et/ou avoir ses parois équipées de divers systèmes personnalisables/modulables permettant une alimentation électrique de l'intérieur du volume intérieur ou le passage d'objets entre l'intérieur et l'extérieur du volume intérieur, et/ou etc.

Ainsi, des caractéristiques additionnelles avantageuses de la boîte à gants conforme à l'invention sont spécifiées aux autres revendications.

L'invention sera mieux comprise à la lecture de la description qui va suivre, donnée uniquement à titre d'exemple et faite en se référant aux dessins sur lesquels :
[Fig. 1] La figure 1 est une vue en perspective d'une boîte à gants conforme à l'invention ;
[Fig.2] la figure 2 est une vue similaire à la figure 1, montrant la boîte à gants sous un autre angle de vue ;
[Fig. 3] la figure 3 est une coupe schématique selon le plan III de la figure 1 ; et
[Fig. 4] la figure 4 est une coupe schématique partielle selon le plan IV de la figure 1.

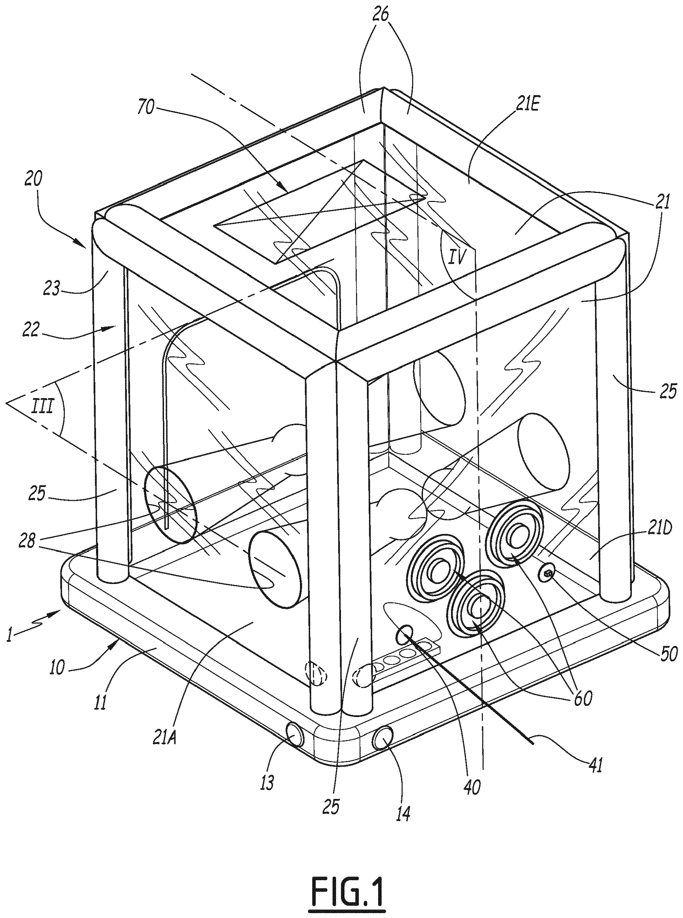

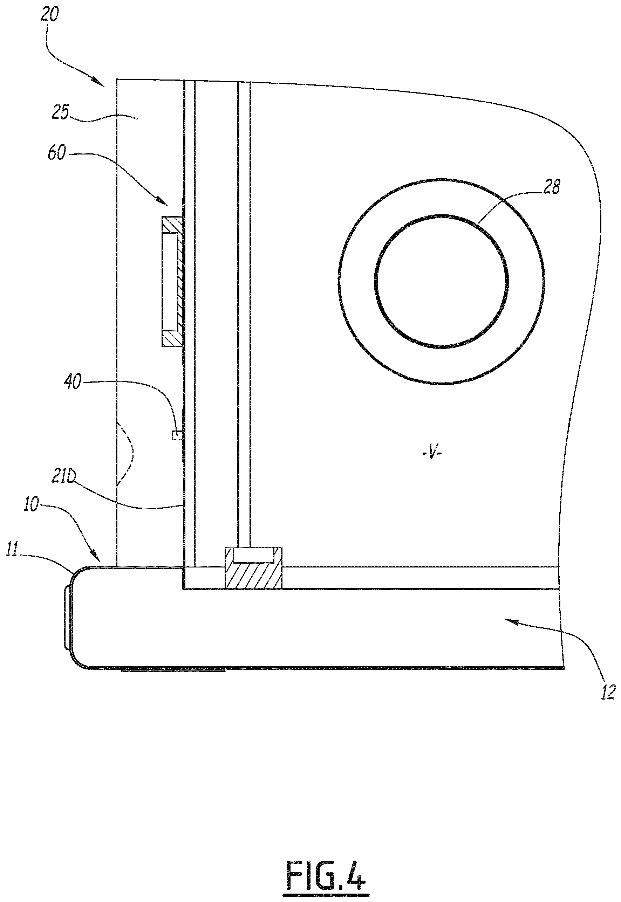

Sur les figures 1 à 4 est représentée une boîte à gants 1, autrement appelée isolateur. Comme expliqué en détail par la suite, la boîte à gants 1 est portative, dans le sens où elle est aisément portable par une personne, notamment à des fins de transport, d'utilisation et de stockage. La boîte à gants 1 se différencie ainsi des boîtes à gants connues qui sont installées à demeure dans des laboratoires d'analyse. De plus, la boîte à gants 1 est typiquement utilisable par un utilisateur appartenant à des forces de l'ordre ou de sécurité lors d'une intervention policière ou militaire, et ce directement sur le terrain d'intervention, c'est-à-dire hors laboratoire.

Comme bien visible sur les figures 1 à 4, la boîte à gants 1 comporte principalement un socle 10 et une enveloppe 20.

Le socle 10 et l'enveloppe 20 sont souples. Autrement dit, à la différence d'éléments rigides appartenant aux boîtes à gants connues qui sont installées à demeure dans des laboratoires, le socle 10 et l'enveloppe 20 présentent une certaine flexibilité permettant à l'utilisateur de les déformer aisément sans les rompre. A cet effet, le socle 10 et l'enveloppe 20 sont réalisés en des matériaux flexibles, notamment en une ou plusieurs matières plastiques, le cas échéant renforcées ou chargées. Suivant une forme de réalisation avantageuse, les matériaux du socle 10 et de l'enveloppe 20 répondent aux exigences normatives NRBC (acronyme de l'expression « Nucléaire, Radiologique, Biologique et Chimique »). Autrement dit, les matériaux choisis résistent aux risques nucléaire, radiologique, biologique et chimique.

Quels que soient les matériaux respectifs du socle 10 et de l'enveloppe 20, cette dernière s'étend depuis le socle 10 de manière que le socle 10 et l'enveloppe 20 délimitent conjointement entre eux un volume fermé V. Ce volume fermé V correspond à un volume intérieur de la boîte à gants 1, qui est séparé de manière étanche vis-à-vis de l'extérieur de la boîte à gants 1 par le socle 10 et l'enveloppe 20.

Le socle 10 est gonflable. A cet effet, comme bien visible sur les figures 1, 2 et 4, le socle 10 comprend un corps principal 11 qui est creux et qui délimite ainsi intérieurement une chambre de gonflage 12. Sur les figures, le socle 10 est représenté à l'état gonflé, c'est-à-dire avec sa chambre de gonflage 12 remplie d'un fluide sous pression, typiquement d'air sous pression. Comme bien visible sur les figures, à l'état gonflé, le socle 10 forme un support plan qui est utilisable en tant que support de travail, notamment pour y faire reposer de manière stable des objets à manipuler situés à l'intérieur du volume fermé V. Autrement dit, lorsque la chambre de gonflage 12 est gonflée, le corps principal 11 forme un plateau de travail qui, malgré la souplesse du ou des matériaux constituant le socle 10, est stable en forme du fait du gonflage du corps principal 11.

Lorsque la boîte à gants 1 est en service, c'est-à-dire utilisable pour manipuler des objets situés à l'intérieur du volume fermé V, le socle 10 à l'état gonflé est prévu pour être positionné globalement à l'horizontale : les objets précités peuvent ainsi reposer, directement ou indirectement, sur la face supérieure, c'est-à-dire tournée vers le haut, du socle 10, notamment de son corps principal 11, tandis que la face inférieure du socle 10 prend appui vers le bas contre le sol ou contre un plan de travail horizontal.

Comme bien visible sur les figures, l'enveloppe 20 comprend des parois 21 et une armature 22 supportant les parois 21.

Chacune des parois 21 sépare l'intérieur et l'extérieur du volume fermé V de manière étanche. Pour permettre à l'utilisateur de voir l'intérieur du volume fermé V depuis l'extérieur de ce dernier, les parois 21 sont transparentes, en étant constituées d'un ou de matériaux ad hoc.

L'armature 22 est gonflable. A cet effet, suivant des considérations similaires à celles relatives au socle 10 gonflable, l'armature 22 comporte un corps principal 23 qui est creux et qui délimite ainsi une chambre de gonflage 24 qui, lorsqu'elle est remplie d'un fluide sous pression, typiquement d'air sous pression, met le corps principal 23 à l'état gonflé. Suivant une forme de réalisation pratique, qui est mise en œuvre dans l'exemple illustré aux figures, le corps principal 23 de l'armature 22 s'étend depuis le corps principal 11 du socle 10 et, avantageusement, les chambres de gonflage 12 et 24 sont reliées fluidiquement l'une à l'autre : ainsi, le socle 10 et l'armature 22 sont en communication fluidique l'un avec l'autre de manière que le gonflage de l'un induit le gonflage de l'autre. A cet effet, à titre d'exemple non limitatif, le socle 10 est pourvu d'une valve de gonflage 13 qui, à l'intérieur du corps principal 11, débouche dans la chambre de gonflage 12 et qui, à l'extérieur du corps principal 11, est adapté pour être alimenté en un fluide sous pression. La valve de gonflage 13 est par exemple prévue pour être raccordée à une pompe à air, non représentée sur les figures. Lorsque la pompe à air précitée est actionnée ou, plus généralement, lorsque la valve de gonflage 13 est alimentée en un fluide sous pression, la chambre de gonflage 12 et la chambre de gonflage 24 se remplissent conjointement depuis la valve de gonflage 13, jusqu'à passer le socle 10 et l'enveloppe 20 à l'état gonflé. Avantageusement, le socle 10 est également pourvu d'une valve de surpression 14 qui s'ouvre automatiquement quand la pression à l'intérieur des chambres de gonflage 12 et 14 dépasse une valeur limite : de cette façon, la pompe à air précitée ou, plus généralement, l'alimentation en fluide comprimé peut être opérée en continu dans le temps ou suivant un cycle d'activation prédéterminé, de manière à maintenir l'état gonflé du socle 10 et de l'armature 22 sans courir le risque d'exposer ces derniers à un surgonflage.

Dans tous les cas, à l'état gonflé du socle 10 et de l'armature 22, les parois 21 de l'enveloppe 20 sont tendues de manière à donner au volume fermé V une forme opérationnelle prédéterminée. En pratique, la tension qui est appliquée aux parois 21 à l'état gonflé du socle 10 et de l'armature 22 est prévue pour étirer ces parois et ainsi éviter des pliures de ces dernières, de telles pliures pouvant gêner l'observation de l'intérieur du volume fermé V depuis l'extérieur de ce dernier par l'utilisateur. A cet effet, à l'état gonflé du socle 10 et de l'armature 22, les parois 21 présentent une certaine capacité de déformation, notamment comparativement au socle 10 qui, comme expliqué plus haut, est prévu pour former un support de travail stable vis-à-vis des objets situés à l'intérieur du volume fermé V : en d'autres termes, à l'état gonflé du socle 10 et de l'armature 22, le socle 10 est plus résistant à la déformation que les parois 21.

Dans l'exemple illustré sur les figures, la forme opérationnelle précitée du volume fermé V est avantageusement un pavé, en particulier un cube d'environ un mètre de côté. Lorsque la boîte à gants 1 est en service, ce pavé présente :
- une face inférieure qui est formée par le socle 10, en particulier par la face supérieure de son corps principal 11,
- quatre face latérales qui sont respectivement formées par certaines parois parmi les parois 21, à savoir par des parois latérales 21A, 21B, 21C et 21D, et
- une face supérieure qui est formée par l'une des parois 21, à savoir une paroi supérieure 21E.

Les arêtes du pavé précité, qui relient deux à deux les faces latérales de ce dernier, sont respectivement formées par quatre montants 25 de l'armature 22, qui s'étendent depuis le socle 10. Les arêtes du pavé, qui relient la face supérieure de ce dernier à, respectivement, les faces latérales de ce dernier, sont respectivement formées par quatre traverses 26 de l'armature 22, qui relient deux à deux les montants 25 au niveau des extrémités respectives de ces derniers, opposées au socle 10. Les montants 25 et les traverses 26 sont gonflables et, à cet effet, comportent chacun au moins un boudin, qui constitue une partie du corps principal 23 de l'armature 22 et dont le volume intérieur constitue une partie de la chambre de gonflage 24. En pratique, les spécificités de réalisation des montants 25 et des traverses 26 ne sont pas limitatives du moment que, conjointement, ils forment l'armature 22 de l'enveloppe 20. Dans l'exemple de réalisation considéré sur les figures, chacun des montants 25 et chacune des traverses 26 comportent une paire de tels boudins, agencés en parallèle l'un de l'autre et de manière juxtaposée l'un à l'autre. Dans tous les cas, les parois 21 sont reliées de manière étanche au socle 10, aux montants 25 et aux traverses 26 : plus précisément, chacune des parois latérales 21A est reliée de manière étanche au socle 10 le long du bord inférieur de la paroi latérale, à deux des montants 25 le long des bords gauche et droit de la paroi latérale, et à l'une des traverses 26 le long du bord supérieur de la paroi latérale, tandis que la paroi supérieure 21E est reliée de manière étanche aux quatre traverses 26 le long des bords de la paroi supérieure 21E. En pratique, la forme de réalisation pour la liaison entre les parois 21A à 21E et le socle 10, les montants 25 et les traverses 26 n'est pas limitative du moment que cette liaison soit étanche : à titre d'exemple, cette liaison est réalisée par soudage.

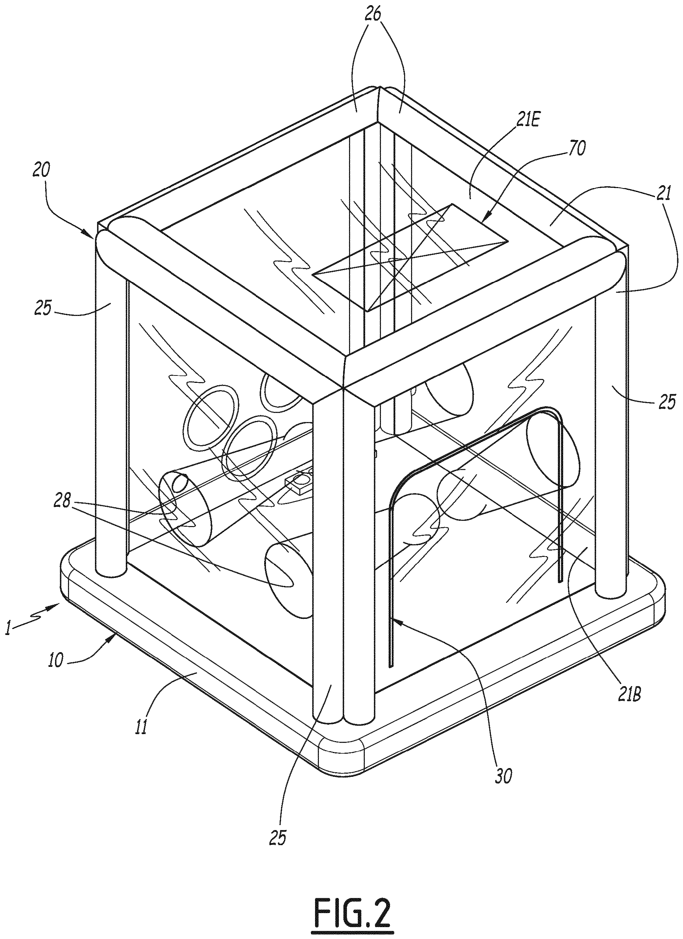

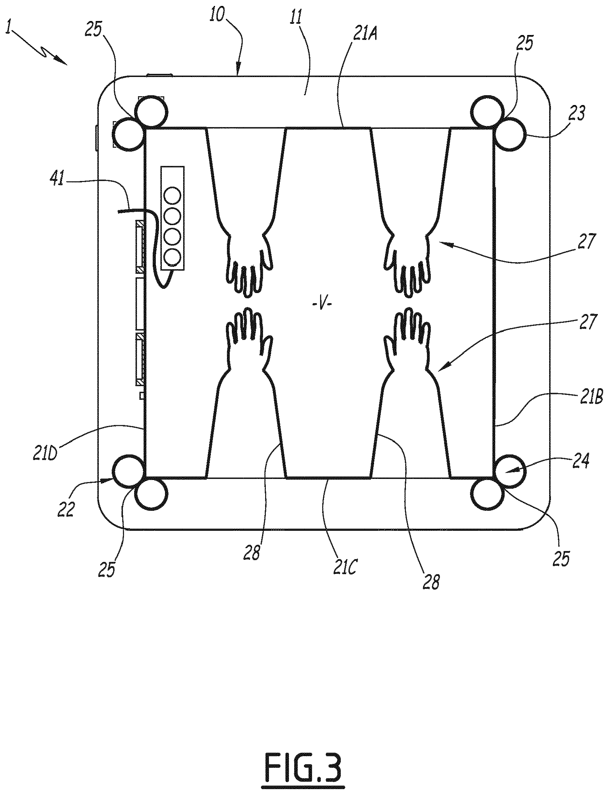

Comme bien visible sur la figure 3, l'enveloppe 20 comporte également deux paires de gants 27 qui sont respectivement portées par les parois latérales 21A et 21C opposées l'une à l'autre. Sur les figures 1 et 2, les paires de gants 27 ne sont représentées que de manière schématique. Chaque gant de chaque paire de gants 27 est porté de manière étanche par la paroi associée 21A ou 21C, en étant avantageusement relié de manière étanche à cette dernière par une manchette 28. Chaque gant de chaque paire de gants 27 est adapté pour recevoir, depuis l'extérieur du volume fermé V, une main d'un utilisateur, introduite via la manchette 28 correspondante. Chaque gant de chaque paire de gants 27 permet ainsi à l'utilisateur de manipuler, par sa main reçue à l'intérieur du gant concerné, des objets situés à l'intérieur du volume fermé V.

En pratique, la forme de réalisation de la liaison étanche entre chaque gant des paires de gant 27 et la paroi associée 21A ou 21C n'est pas limitative. Suivant une forme de réalisation préférentielle, chaque gant de chaque paire de gants 27 est scellée à demeure à la paroi associée 21A ou 21C, en étant notamment venu de matière avec cette paroi, notamment par l'intermédiaire de la manchette correspondante 28.

Afin d'accéder à l'intérieur du volume fermé V depuis l'extérieur de ce dernier, une ou plusieurs des parois 21 portent de manière étanche des équipements ad hoc. Dans l'exemple de réalisation considéré sur les figures, de tels équipements sont prévus sur les parois latérales 21B et 21D.

La paroi latérale 21B est ainsi équipée d'un dispositif 30 de fermeture étanche entre une partie rabattable de la paroi latérale 21B et le reste de cette paroi latérale 21B. Le dispositif 30 est par exemple un système zippé ou bien une fermeture éclair, doublée d'un rabat de protection. Sur les figures, le dispositif 30 est fermé. Lorsque le dispositif 30 est ouvert, la partie rabattable précitée de la paroi latérale 21B est écartable du reste de cette paroi latérale 21B, ce qui dégage un accès libre au volume fermé V, notamment pour faire entrer/sortir des objets vis-à-vis du volume fermé V.

La paroi latérale 21D est, quant à elle, équipée à la fois :
- d'un passe-câble 40 étanche, permettant de faire passer un câble, notamment un câble électrique, au travers de la paroi latérale 21D de manière étanche, un câble électrique 41 étant représenté sur les figures comme étant reçu au travers du passe-câble 40 pour relier une multiprise électrique, placée à l'intérieur du volume fermé V, à l'extérieur du volume fermé V ;
- d'un dispositif de connexion 50 permettant de raccorder l'un à l'autre des périphériques électroniques, respectivement situés à l'intérieur et à l'extérieur du volume fermé V, ce dispositif de connexion 50 comportant par exemple deux ports USB reliés entre eux et débouchant respectivement à l'intérieur et à l'extérieur du volume fermé V ; et
- deux bouches 60 obturables de manière étanche, qui permettent de faire entrer/sortir des objets vis-à-vis du volume fermé V, chacune de ces bouches 60 étant, sur les figures, représentées obturées par des bouchons amovibles, au moins certaines de ces bouches 60 étant avantageusement raccordables, à l'extérieur du volume fermé V, à des enceintes étanches permettant d'amener et/ou d'évacuer des objets vis-à-vis de la boîte à gants 1.

Suivant une disposition particulièrement avantageuse, l'armature 22 est équipée d'au moins un panneau photovoltaïque souple 70 qui, en service, produit une énergie électrique suffisante pour alimenter des appareils électriques ou électroniques, placés à l'intérieur du volume fermé V. En pratique, ce ou ces panneaux photovoltaïques souples 70 sont apposés sur une ou plusieurs des parois 21, notamment sur la paroi supérieure 21E comme illustré schématiquement sur les figures 1 et 2.

Bien entendu, la nature, le nombre et la disposition des équipements 30, 40, 50, 60 et 70 portés de manière étanche par au moins certaines des parois 21 ne sont pas limitatifs. Au contraire, la disposition, la nature et/ou le nombre de tels équipements sont adaptables selon les besoins prévisibles de l'utilisateur, rendant ainsi modulable et personnalisable la conception de la boîte à gants 1.

Un exemple d'utilisation de la boîte à gants 1 est le suivant.

La boîte à gants 1 est mise à disposition alors que le socle 10 et l'armature 22 sont dégonflés. La boîte à gants 1 présente alors un encombrement restreint, ce qui en facilite le stockage et le transport. La boîte à gants 1 est ainsi facilement transportée jusque sur un site d'intervention policière ou militaire, au plus près d'objets devant être manipulés en milieu clos.

La boîte à gants 1 est alors déployée, moyennant le gonflage du socle 10 et de l'armature 22. A l'état gonflé du socle 10 et de l'armature 22, la boîte à gants 1 est dans la configuration de service qui est illustrée sur les figures.

Les objets à manipuler en milieu clos sont alors introduits à l'intérieur du volume fermé V, notamment via l'une des bouches 60 ou au travers de la paroi 21B après avoir ouvert le dispositif 30 qui est ensuite refermé.

L'utilisateur, typiquement membre de forces de l'ordre ou de sécurité, peut ensuite manipuler les objets à l'intérieur du volume fermé V en utilisant l'une des paires de gants 27. Le cas échéant, un second utilisateur participe à cette manipulation, en utilisant l'autre paire de gants 27. La nature des opérations appliquées aux objets situés à l'intérieur du volume fermé V n'est pas limitative et couvre ainsi de multiples possibilités, notamment en lien avec des interventions, hors laboratoire, des forces de l'ordre ou de sécurité. A cet égard, on peut se reporter aux explications données en introduction du présent document.

Si besoin, une alimentation électrique est permise à l'intérieur du volume fermé V grâce au passe-câble 40 et/ou à l'écran photovoltaïque souple 70, ce qui est très pratique eu égard au contexte d'utilisation hors laboratoire, sur des terrains en extérieur. Cette alimentation électrique sert par exemple à éclairer l'intérieur de la boîte à gants 1. De même, un périphérique électronique est utilisable à l'intérieur du volume fermé V, tout en raccordant ce périphérique à un autre périphérique situé à l'extérieur de la boîte à gants 1, via le dispositif de connexion 50.

Une fois que les manipulations précitées sont terminées, les objets présents à l'intérieur du volume V en sont évacués, via les bouches 60 et/ou l'accès permis par le dispositif 30. Le socle 10 et l'armature 22 peuvent alors être dégonflés pour replier sur elle-même la boîte à gants 1. La boîte à gants 1 est ensuite soit décontaminée, soit jetée. En d'autres termes, la boîte à gants 1 est soit utilisable à plusieurs reprises, moyennant sa décontamination régulière, soit à usage unique.

Enfin, divers aménagements et variantes à la boîte à gants 1 décrite jusqu'ici sont envisageables. A titre d'exemples :
- l'armature 22, en particulier les montants 25 et les traverses 26, sont translucides, voire transparentes, ce qui améliore la visibilité de l'intérieur du volume fermé V pour l'utilisateur ;
- une seule paire de gants 27 ou, au contraire, davantage que deux paires de gants 27 sont envisageables ;
- plutôt que d'être scellés à demeure aux parois 21, les gants de la ou des paires de gants 27 peuvent être portés de manière étanche par les parois 21 de façon amovible, en particulier si la boîte à gants 1 n'est pas à usage unique mais est prévue pour être régulièrement décontaminée ;

- si on renonce à mettre en communication fluidique le socle 10 et l'armature 22, l'armature 22 doit être pourvue de sa propre valve de gonflage et, le cas échéant, de sa propre valve de surpression, comme indiqué en pointillés sur les figures ; et/ou
- en option, l'atmosphère du volume fermé V est contrôlée au moyen d'équipements ad hoc portés par la boîte à gants 1, tels que des équipements de ventilation et/ou de filtration et/ou de décontamination de l'air.

## Revendications

1. Boîte à gants (1) souple et portative pour intervention hors laboratoire, comportant :
- un socle (10) souple, qui est gonflable et qui, à l'état gonflé, forme un support de travail qui est plan et est adapté pour, en service, être positionné globalement à l'horizontale, et
- une enveloppe (20) souple, qui s'étend depuis le socle de manière que le socle et l'enveloppe délimitent conjointement un volume fermé (V), l'enveloppe comprenant :
- des parois (21) qui sont transparentes et qui séparent chacune l'intérieur et l'extérieur du volume fermé (V),
- une armature (22), qui est gonflable et qui supporte les parois (21) de sorte que, à l'état gonflé du socle (10) et de l'armature (22), les parois sont tendues, en donnant au volume fermé (V) une forme opérationnelle, et
- au moins une paire de gants (27), chaque gant étant porté de manière étanche par l'une des parois (21) et étant adapté pour recevoir, depuis l'extérieur du volume fermé (V), une main d'un utilisateur et pour manipuler des objets situés à l'intérieur du volume fermé,
dans laquelle le socle (10) comprend un corps principal (11), qui est creux, en délimitant ainsi une chambre de gonflage (12) qui, lorsqu'elle est remplie d'un fluide sous pression, met le socle à l'état gonflé,
dans laquelle, à l'état gonflé du socle (10), le corps principal (11) du socle forme un plateau de travail qui est stable en forme de sorte que les objets situés à l'intérieur du volume fermé (V) peuvent reposer, directement ou indirectement, sur une face supérieure du corps principal du socle de manière stable,
et dans laquelle, à l'état gonflé du socle (10) et de l'armature (22), le socle (10) est plus résistant à la déformation que les parois (21).

2. Boîte à gants suivant la revendication 1,
dans laquelle ladite forme opérationnelle est un pavé qui, en service, présente :
- une face inférieure qui est formée par ladite face supérieure du corps principal (11) du socle (10),
- quatre faces latérales qui sont respectivement formées par des parois dites latérales (21A, 21B, 21C, 21D) parmi les parois (21) de l'enveloppe (20), et
- une face supérieure qui est formée par une paroi dite supérieure (21E) parmi les parois de l'enveloppe,
dans laquelle l'armature (22) comprend :
- des montants (25) gonflables, qui s'étendent depuis le socle (10) en formant des arêtes du pavé, reliant deux à deux les faces latérales du pavé, et
- des traverses (26) gonflables, qui relient deux à deux les montants (25) et qui forment des arêtes du pavé, reliant la face supérieure du pavé à, respectivement, les faces latérales du pavé,
et dans laquelle les parois (21) sont reliées de manière étanche au socle (10), aux montants (25) et aux traverses (26).

3. Boîte à gants suivant la revendication 2, dans laquelle le pavé est un cube d'environ un mètre de côté.

4. Boîte à gants suivant l'une quelconque des revendications précédentes, dans laquelle le socle (10) et l'armature (22) sont en communication fluidique l'un avec l'autre de manière que le gonflage de l'un induit le gonflage de l'autre.

5. Boîte à gants suivant la revendication 4,
dans laquelle l'armature (22) comprend un corps principal (23), qui est creux, en délimitant ainsi une chambre de gonflage (24) qui, lorsqu'elle est remplie d'un fluide sous pression, met l'armature à l'état gonflé, et
dans laquelle le corps principal (23) de l'armature (22) s'étend depuis le corps principal (11) du socle (10) de sorte que les chambres de gonflage (12, 24) des corps principaux respectifs du socle et de l'armature sont reliées fluidiquement l'une à l'autre.

6. Boîte à gants suivant l'une quelconque des revendications précédentes, dans laquelle l'armature (22) est équipée d'au moins un panneau photovoltaïque souple (70) qui est adapté pour produire une énergie électrique fournie à l'intérieur du volume fermé (V).

7. Boîte à gants suivant l'une quelconque des revendications précédentes, dans laquelle l'armature (22) est translucide, voire transparente.

8. Boîte à gants suivant l'une quelconque des revendications précédentes, dans laquelle au moins une des parois (21) de l'enveloppe (20) porte de manière étanche au moins un dispositif (30) de fermeture étanche entre une partie rabattable de la paroi et le reste de la paroi.

9. Boîte à gants suivant l'une quelconque des revendications précédentes, dans laquelle au moins une des parois (21) de l'enveloppe (20) porte de manière étanche au moins un passe-câble (40) étanche.

10. Boîte à gants suivant l'une quelconque des revendications précédentes, dans laquelle au moins une des parois (21) de l'enveloppe (20) porte de manière étanche au moins un dispositif de connexion (50) permettant de raccorder l'un à l'autre des périphériques électroniques qui sont respectivement situés à l'intérieur et à l'extérieur du volume fermé (V).

11. Boîte à gants suivant l'une quelconque des revendications précédentes, dans laquelle au moins une des parois (21) de l'enveloppe (20) porte de manière étanche au moins une bouche (60) obturable de manière étanche, permettant de faire entrer/sortir des objets vis-à-vis du volume fermé (V).

12. Boîte à gants suivant l'une quelconque des revendications précédentes, dans laquelle chaque gant de la ou des paires de gants (27) est scellé à demeure à la paroi associée (21).

13. Boîte à gants suivant l'une quelconque des revendications précédentes, dans laquelle deux paires de gants (27) sont prévues, en étant respectivement portées par deux des parois (21), qui sont opposées l'une à l'autre.
